# EUROPÄISCHE PATENTANMELDUNG

(11) **EP 3 597 779 A1**
(43) Veröffentlichungstag der Anmeldung: **22.01.2020**
(21) Anmeldenummer: 19174783.1
(22) Anmeldetag: 15.05.2019
(51) Int. Cl.: C21D 1/20, B62D 3/12, B62D 5/22, B62D 5/24, C21D 9/32, B23H 5/06, B23H 9/00, B23H 9/14, F16H 55/06

(54) **HOCHFESTES LENKRITZEL**

(30) Priorität: 18.07.2018 DE 102018212009
(71) Anmelder: Volkswagen AG, 38440 Wolfsburg (DE)
(72) Erfinder: Huk, André, 38110 Braunschweig (DE)

(57) **Zusammenfassung**

Die Erfindung betrifft ein Verfahren zur Herstellung eines Lenkritzels (10) und ein Lenkritzel (10). Es ist vorgesehen, dass das Lenkritzel (10) aus einem bainitisierbaren Wälzlagerstahl nach EN ISO 683-17 besteht und durch Bainitisieren als hochfestes Lenkritzel (10) ausgebildet ist.

## Beschreibung

Die Erfindung betrifft ein Verfahren zur Herstellung eines Lenkritzels eines Lenksystems sowie das Lenkritzel, in dem im Zusammenbauzustand ein Drehstab anordbar ist.

Die Druckschrift DE 10 2004 003 541 A1 offenbart einen Stahl zur Verwendung für eine hochfeste Ritzelwelle zum Herstellen der Ritzelwelle, die in Lenksystemen eines Kraftfahrzeugs verwendet wird, sowie ein zugehöriges Herstellverfahren hierfür. Der beschriebene Stahl der Erfindung mit der in der Druckschrift genannten spezifischen Zusammensetzung verursacht selteneres Auftreten von Ablösen während des Abwälzfräsens, weist eine hohe Oberflächenhärte, Kerbschlagzähigkeit und Torsionsfestigkeit nach einer Hochfrequenzhärtung auf und leidet weniger an Wärmebehandlungsbelastungen während der Hochfrequenzhärtung.

Die Druckschrift DE 10 2006 059 050 A1 beschreibt ein Verfahren zur Wärmebehandlung von Wälzlagerbauteilen aus durchgehärtetem, bainitischem Wälzlagerstahl mit Druckeigenspannungen im Randbereich und einem Martensitanteil sowie einem Restaustenitanteil, bei dem die Wärmebehandlung zweistufig durchgeführt wird, wobei das Werkstück von der Austenitisierungstemperatur ausgehend zunächst in einem Salzbad, das eine Temperatur leicht unterhalb der Martensit-Starttemperatur aufweist, abgeschreckt und solange gehalten wird, bis ein Temperaturausgleich eingetreten ist, wobei das Werkstück anschließend in ein zweites Bad, dessen Temperatur geringfügig über der Martensit-Starttemperatur liegt, umgesetzt und über der Martensit-Starttemperatur gehalten wird.

Die Druckschrift DE 10 2006 046 765 A1 offenbart ein zweistufiges Verfahren, bei dem in einem ersten Verfahrensschritt eine konventionelle mechanische vorzugsweise zerspanende Bearbeitung eines zu bearbeitenden Materials, insbesondere des Materials einer nachfolgend als Werkstück bezeichneten Kurbelwelle, stattfindet. Dabei wird berücksichtigt, dass das geometrische Bearbeitungsmaß um den Betrag des Bearbeitungsmaßes der nachfolgenden elektrochemischen Bearbeitung, das heißt dessen Werkstoffabtrag, korrigiert werden muss. In einem zweiten nachfolgenden Verfahrensschritt wird die konventionell vorbearbeitete Kavität mittels eines elektrochemischen Bearbeitungsverfahrens bearbeitet. Dazu werden bekannte Vorrichtungen zur elektrochemischen Bearbeitung eingesetzt - das Verfahren der elektrochemischen Bearbeitung (ECM - ElectroChemical Machining) oder auch der weiter entwickelten elektrochemischen Bearbeitung, der so genannten gepulsten elektrochemischen Bearbeitung (PECM - Pulsed ElectroChemical Machining), die dadurch gekennzeichnet sind, dass bei der Bearbeitung kein direkter Kontakt zwischen Werkzeug und Bearbeitungsobjekt (zu bearbeitendes Werkstück) herrscht. Zur Bearbeitung werden Werkzeug und zu bearbeitendes Werkstück relativ zueinander verschoben, so dass sich auf dem Werkstück die Geometrie des Werkzeugs abbildet. Dazu wird zwischen dem Werkzeug und dem Werkstück eine elektrische Spannung angelegt, wobei das Werkstück als Anode und das Werkzeug als Kathode geschaltet wird. Für die Bearbeitung wird ein vorhandener Spalt, vorzugsweise kleiner als 1 mm, zwischen Werkzeug (Kathode) und Werkstück (Anode) mit einer Elektrolytlösung gespült. Der Werkstoffabtrag am Werkstück erfolgt somit elektrochemisch und der aufgelöste Werkstoff wird als Metallhydroxid von der Elektrolytlösung aus der Bearbeitungszone herausgespült. Das PECM-Verfahren weist eine weitaus geringere Spaltbreite zwischen Werkzeug und Objekt auf, vorzugsweise eine Spaltbreite von 0,01 bis 0,2 mm, und besitzt deshalb eine wesentlich höhere Bearbeitungsgenauigkeit als das ECM-Verfahren. Charakteristisch für das PECM-Verfahren ist noch, dass der Bearbeitungsstrom nicht permanent anliegt, wie beim ECM-Verfahren, sondern als gepulster Strom zugeführt wird. Das Verfahren der elektrochemischen Bearbeitung zeichnet sich weiterhin durch hohe Prozessstabilität aus.

Ergänzend wird auf die Druckschrift DE 10 2010 032 326 A1 verwiesen, die ebenfalls eine Vorrichtung und ein Verfahren zur Herstellung einer Kavität (Bohrung) mittels elektrochemischer Bearbeitung (ECM) beziehungsweise gepulster elektrochemischer Bearbeitung (PECM) beschreibt.

Der Erfindung liegt nun die Aufgabe zugrunde, ausgehend von dem genannten Stand der Technik die Eigenschaften eines Werkstückes, insbesondere eines Lenkritzels, zu verbessern.

Die Erfindung betrifft ein Verfahren zur Herstellung eines Lenkritzels.

Es ist vorgesehen, dass ein Rohling des Lenkritzels aus einem bainitisierbaren Wälzlagerstahl nach EN ISO 683-17 hergestellt wird, der anschließend zur Erhöhung der Härte bainitisiert wird, wodurch das Lenkritzel in vorteilhafter Weise eine höhere Duktilität und Schlagzähigkeit sowie Verschleißfähigkeit aufweist.

Das Lenkritzel ist in vorteilhafter Weise durch das Bainitisieren maßstabiler als herkömmliche Lenkritzel und weist ein besonders zähes Gefüge auf. Es wird eine Härte erreicht, die bei circa 58 HRC (Härte nach Rockwell) liegt. Da auch die Lager des Lenkritzels bainitisiert werden, sind in vorteilhafter Weise aufgrund der höheren Bruchfestigkeit im Vergleich zu martensitisch gehärteten Lenkritzeln längere Lebenszyklen des erfindungsgemäßen Lenkritzels erreichbar.

Die Lager können somit in vorteilhafter Weise größeren Stoßbelastungen ausgesetzt werden. Die Druck-Eigenspannungen in der Randzone des bainitisierten Lenkritzels sind geringer, so dass alle Bereiche des Lenkritzels höheren Belastungen ausgesetzt werden können. Die bei herkömmlich hergestellten Lenkritzeln lokal auftretenden geringeren Festigkeitszustände lassen sich ferner durch das Bainitisieren in vorteilhafter Weise beheben.

Bevorzugt ist vorgesehen, dass zur Herstellung einer Bohrung in dem Rohling des Lenkritzels vor dem Bainitisieren
- zunächst eine Bohrung als Vorkontur in den "weichen" Rohling eingebracht (Schritt a)) wird, und
- das Lenkritzel erst anschließend bainitisiert (Schritt b)) wird, wonach
- schließlich eine Oberfläche der Bohrung zur Veränderung der Oberflächengüte und Oberflächenstruktur der Bohrung zur Herstellung einer Endkontur "hart" nachbehandelt (Schritt c)) wird.

In bevorzugter Ausgestaltung der Erfindung ist vorgesehen, dass (Schritt a)) die Vorkontur der Bohrung in das Lenkritzel vor dem Bainitisieren (Schritt b)) mechanisch gebohrt oder mittels elektrochemischer Bearbeitung eingebracht wird.

Bevorzugt ist vorgesehen, dass die Endkontur der Bohrung zur Veränderung der Oberflächengüte und der Oberflächenstruktur der Vorkontur der Bohrung nach dem Bainitisieren (Schritt b)) des Lenkritzels mittels elektrochemischer Bearbeitung nachbehandelt (Schritt c)) wird.

Dabei ist in alternativen Ausführungsvarianten vorgesehen, dass die Vorkontur und/oder die Endkontur in den Schritten a) und c) durch elektrochemische Bearbeitung (ECM) oder durch die gepulste elektrochemische Bearbeitung (PECM) eingebracht/nachbehandelt wird.

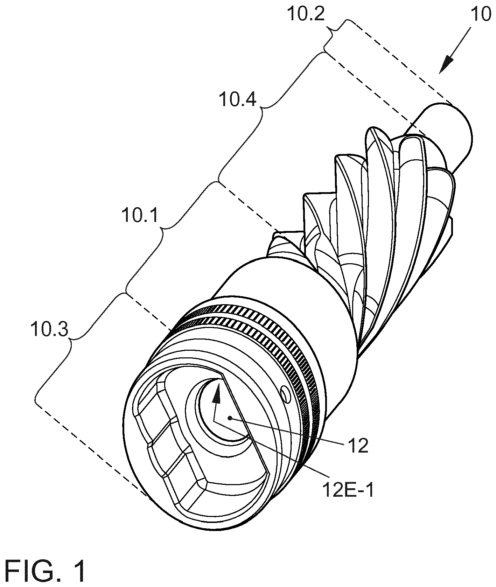

Erfindungsgemäß wird das Lenkritzel aus Wälzlagerstahl nach EN ISO 683-17 mit der Bezeichnung 100Cr6 als Rohling ausgebildet, der eine chemische Stoffzusammensetzung in Gewichts-% mit 0,93 bis 1,05 Kohlenstoff (C:), 0,15 bis 0,35 Silizium (Si:) und 0,25 bis 0,45 Mangan (Mn:) und 1,35 bis 1,6 Chrom (Cr:) und gegebenenfalls weiteren geringfügigen chemischen Stoffen aufweist. Als Rohling wird erfindungsgemäß ein Lenkritzel angesehen, welches noch keine Bohrung aufweist. Mit anderen Worten, die anderen in Figur 1 gezeigten Strukturen können bereits ausgebildet sein.

Das an sich bekannte Bainitisieren findet im Schritt b) statt und wird erfindungsgemäß an dem Lenkritzel vorgenommen, indem der Rohling des Lenkritzels (ohne Bohrung) oder das mit der Bohrung als Vorkontur versehene Lenkritzel folgenden Teilschritten unterzogen wird.

Erwärmen (Schritt b1)) des Lenkritzels auf Austenitisierungstemperatur.

Abkühlen (Schritt b2)) des Lenkritzels in einem Salzbad auf eine Temperatur zwischen 250 °C und 500 °C oberhalb einer Martensit-Stahlkurve.

Halten (Schritt b3)) der Temperatur zwischen 250 °C und 500 °C oberhalb der Martensit-Stahlkurve 3 in dem Salzbad zwischen einigen Minuten bis Stunden auf einer Bainit-Härtekurve 2.

Abkühlen (Schritt b4)) des Lenkritzels auf Raumtemperatur.

Nach Durchführung des Verfahrens liegt ein hochfestes bainitisiertes Lenkritzel vor.

Das Lenkritzel weist unabhängig von einer vorzusehenden Bohrung die oben beschriebenen Eigenschaften auf.

Umfasst das Lenkritzel eine Bohrung, die nach mindestens einem der Verfahrensschritte nach den Ansprüchen 2 bis 7 hergestellt ist, ist eine Endkontur der Bohrung des Lenkritzels durch elektrochemische Bearbeitung des zuvor bainitisierten Wälzlagerstahls nach EN ISO 683-17 nachbehandelt beziehungsweise nachbehandelbar.

Dadurch ist zumindest die Seitenwandung der Endkontur der Bohrung durch elektrochemische Bearbeitung ausgebildet, so dass die Seitenwandung der Endkontur der Bohrung eine glatte und struktureinheitliche Oberfläche aufweist, die für die elektrochemische Bearbeitung typisch ist.

Die Oberfläche der Seitenwandung der Endkontur der Bohrung ist im Vergleich zu einer mechanisch bearbeiteten Oberfläche in vorteilhafter Weise glatter und struktureinheitlicher und weist eine für die elektrochemische Bearbeitung typische optisch überprüfbare Oberflächenstruktur auf.

Der Fachmann ist in der Lage, durch eine optisch mikroskopische Untersuchung eine mechanisch bearbeitete Oberflächenstruktur von einer durch elektrochemische Bearbeitung erzeugten Oberflächenstrukturen zu unterscheiden.

In vorteilhafter Weise kommt es bei der elektrochemischen Bearbeitung typischerweise zu einer strukturellen Polierwirkung sowie einer strukturellen Einebnung der Oberfläche der Bohrung des Lenkritzels, wobei insbesondere feststellbar ist, dass über den gesamten Bereich, in dem die elektrochemische Bearbeitung vorgenommen worden ist, keine strukturellen Unterschiede der Oberflächenparameter festgestellt werden, wie es vergleichsweise bei einer mechanischen Bearbeitung in dort typischer Weise der Fall ist.

In bevorzugter Ausgestaltung der Erfindung kann die Seitenwandung der Endkontur der Bohrung durch die elektrochemische Bearbeitung eine gemittelte Rautiefe (R_{z}) aufweisen, die sogar kleiner/gleich </= 5 µm beträgt.

Von besonderem Vorteil ist somit neben der Erreichbarkeit der glatten Oberfläche (gemittelte Rautiefe (R_{z}) kleiner/gleich </= 5 µm möglich), dass durch die elektrochemische Bearbeitung (ECM, PECM) die Oberfläche der Bohrung über alle derart hergestellten Lenkritzel eine sehr ähnliche Struktur aufweist, wobei in vorteilhafter und typischer Weise Spuren, die bei einer mechanischen Bearbeitung entstehen, nicht vorhanden sind. Bei jeder irgendwie gearteten mechanischen Bearbeitung können solche Spuren festgestellt werden, wobei insbesondere mikroskopische Untersuchungen bei mechanisch bearbeiteten Bohrungen partiell starke - nicht gewünschte - Unterschiede in der Oberflächenstruktur zeigen.

Es wurde festgestellt, dass bei konventionellen mechanischen Hartbearbeitungen nahezu identische Messwerte hinsichtlich der Oberflächengüte, beispielsweise der gemittelten Rautiefe (R_{z}), vorliegen, jedoch optisch deutlich unterschiedliche Oberflächenstrukturen vorliegen.

Diese unterschiedlichen Oberflächenstrukturen entstehen insbesondere durch den Werkzeugverschleiß, der bei der elektrochemischen Bearbeitung (ECM, PECM) in vorteilhafter Weise nicht auftritt, wodurch die optisch unterschiedlichen Oberflächenstrukturen vermieden werden.

Diese optisch feststellbaren Strukturunterschiede der Oberfläche bei der mechanischen Bearbeitung beeinflussen drastisch den später folgenden Fügevorgang (das so genannte Drehstabfügen) zwischen der Oberflächenstruktur der Endkontur der Bohrung und der Oberflächenstruktur eines Drehstabes, der durchgeführt wird, um das Lenkritzel und den Drehstab in den Zusammenbauzustand zu bringen, wie nachfolgend detailliert erläutert wird.

Für die dauerhafte Haltbarkeit des Drehstabes in der Bohrung des Lenkritzels im Zusammenbauzustand als Zusammenbaueinheit sind die Oberflächenstrukturen der Bohrung und des Drehstabes von besonderer Bedeutung, insbesondere vor dem Hintergrund, dass die von dem Lenkritzel über den Drehstab aufzunehmenden Kräfte stets höheren Anforderungen unterliegen.

Bevorzugt ist vorgesehen, dass die Vorkontur und/oder die Endkontur durch elektrochemische Bearbeitung (ECM) oder durch die gepulste elektrochemische Bearbeitung (PECM) ausgebildet ist/werden.

Die Erfindung wird nachfolgend in Ausführungsbeispielen anhand der zugehörigen Zeichnungen erläutert. Es zeigen:
- Figur 1: ein Lenkritzel in einer perspektivischen Darstellung;
- Figur 2: das Lenkritzel in einer Seitendarstellung vor Herstellung einer Endkontur einer Bohrung, wobei das Lenkritzel oberhalb einer sich in axialer Richtung erstreckenden Mittellinie geschnitten dargestellt ist;
- Figur 3: das Lenkritzel in der Seitendarstellung gemäß Figur 2 während der Herstellung einer Endkontur der Bohrung des Lenkritzels;
- Figur 4: ein Temperatur[T]-Zeit[t]-Diagramm zur Verdeutlichung des erfindungsgemäßen Verfahrens.

Die Figur 1 zeigt in einer perspektivischen Darstellung ein Lenkritzel 10.

Das Lenkritzel 10 umfasst einen sich in axialer Richtung erstreckenden ersten Lagerbereich 10.1 und einen zweiten sich in axialer Richtung erstreckenden Lagerbereich 10.2, zwischen denen ein sich ebenfalls in axialer Richtung erstreckender Verzahnungsbereich 10.4 ausgebildet ist.

Über ausgebildete Lager in den Lagerbereichen 10.1 und 10.2 ist das Lenkritzel 10 als Teil eines Lenksystems in karosserieseitigen Lagerstellen gelagert. An den ersten Lagerbereich 10.1 schließt sich in axialer Richtung des Lenkritzels 10 ein Überlastschutzbereich 10.3 an, der eine Überlastschutzform aufweist.

Auf der Seite des Überlastschutzbereiches 10.3 des Lenkritzels 10 wird in einem Zusammenbauzustand ein nicht dargestellter Drehstab in einer Bohrung 12 eingepresst, so dass zwischen Drehstab und der Seitenwandung 12E-1 der Bohrung 12 eine form- und reibschlüssige Verbindung hergestellt ist. Der Drehstab überträgt eine Lenkbewegung von einem nicht dargestellten Lenkrad, welches mit dem Drehstab in Wirkverbindung steht, auf das Lenkritzel 10, welches über den Verzahnungsbereich 10.4 beispielsweise mit einer Zahnstange in Verbindung steht.

Es wird deutlich, dass die feste Verbindung zwischen Drehstab und Bohrung 12 nach dem Drehstabfügen, mithin dem Einpressen des Drehstabes in die Bohrung 12, von besonderer Bedeutung ist.

Derzeit wird wie folgt vorgegangen: Die Bohrung 12 wird zunächst mit einer Vorkontur 12V mechanisch (im so genannten Weichzustand) in das Lenkritzel 10 eingebracht. Anschließend wird das Lenkritzel 10 insgesamt gehärtet, wobei zumeist das Induktionshärten oder das Einsatzhärten eingesetzt wird, um insbesondere die Verzahnung des Verzahnungsbereiches 10.4 zu härten. Bei dem Induktionshärten bleibt das Materialgefüge, welches die Vorkontur 12V der Bohrung 12 umgibt, weich, während das Materialgefüge im Randbereich des Lenkritzels 10 gehärtet wird.

Anschließend wird die Vorkontur 12V durch einen weiteren mechanischen Schritt mechanisch nachbearbeitet, so dass Material um ein vorgebbares Aufmaß A mechanisch abgetragen wird.

Nach diesem Abtrag von Material ist schließlich die Endkontur 12E der Bohrung 12 ausgebildet.

Die finale mechanische Bearbeitung erfolgt derzeit durch Spindeln oder Reiben, wobei die Bearbeitung berücksichtigt, ob sich das Materialgefüge, welches die Bohrung 12 umgibt, im so genannten Weichzustand (nach Induktionshärten) oder im so genannten Hartzustand (nach Einsatzhärten) befindet.

Es hat sich herausgestellt, dass die Oberflächenbeschaffenheit bei dieser Vorgehensweise unabhängig vom eingesetzten Härteverfahren schwankt, so dass nach einer Lösung gesucht wird, um diese Schwankungen hinsichtlich der Oberflächenbeschaffenheit zu vermeiden.

Erfindungsgemäß ist vorgesehen, dass in einem Schritt a) die Vorkontur 12V der Bohrung 12 in einer ersten Ausführungsvariante weiterhin mechanisch gefertigt wird.

In einer zweiten Ausführungsvariante ist vorgesehen, dass in dem Schritt a) die Vorkontur 12V der Bohrung 12 durch elektrochemische Bearbeitung ausgebildet wird.

An eine dieser beiden Varianten schließt sich erfindungsgemäß ein Schritt b) - das Bainitisieren des Lenkritzels 10 - an, so dass in einem Schritt c) zur Endbearbeitung, das heißt zur Herstellung der Endkontur 12E der Bohrung 12, eine weiche Vorkontur 12V und nach dem Bainitisieren eine harte Vorkontur 12V der Bohrung 12 vorliegt.

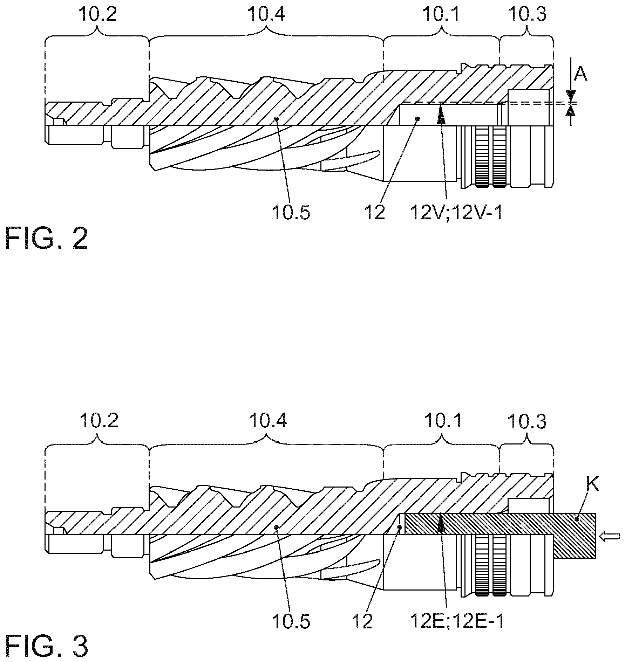

Bei beiden Ausführungsvarianten ist es im Schritt c) erfindungsgemäß möglich, die Endkontur 12E durch elektrochemische Bearbeitung (ECM) oder durch die gepulste elektrochemische Bearbeitung (PECM) auszubilden, wie in den Figuren 2 und 3 in einer Zusammenschau gezeigt wird.

In Figur 2 ist ein Schnitt durch die obere Hälfte des zylindrisch ausgeführten Lenkritzels 10 gelegt, so dass deutlich wird, dass sowohl der Verzahnungsbereich 10.4 als auch anschließend der Korpus 10.5 des Lenkritzels 10 durch Bainitisieren im Schritt b) gehärtet sind, wobei ferner deutlich wird, dass die Vorkontur 12V der Bohrung 12 im ersten Lagerbereich 10.1 des Lenkritzels 10 ausgebildet ist.

Die Bohrung 12 schließt sich an eine Öffnung der Überlastform des Lenkritzels 10 an, wobei die Öffnung von einem Kragen als Überlastform umgeben wird, der in axialer Richtung gesehen den Überlastschutzbereich 10.3 bildet.

In Figur 2 ist das vorgesehene Aufmaß A angetragen, welches den Materialbereich verdeutlicht, der durch elektrochemische Bearbeitung (ECM) oder durch die gepulste elektrochemische Bearbeitung (PECM) abgetragen werden soll, so dass aus der Vorkontur 12V die Endkontur 12E der Bohrung 12 ausbildbar ist.

In Figur 2 ist somit die Seitenwand 12V-1 der Vorkontur 12V dargestellt.

In Figur 3 ist das Prinzip des Verfahrensschrittes c) zur Herstellung der Endkontur 12E der Bohrung 12 verdeutlicht.

Zur elektrochemischen Bearbeitung (ECM oder PECM) wird im Schritt c) eine als Werkzeug dienende Kathode K und das Werkstück, insbesondere das Lenkritzel 10, relativ zueinander verschoben, so dass sich innerhalb der Vorkontur 12V der Bohrung 12 die Geometrie der Kathode K abbildet.

Dazu wird zwischen der Kathode K dem Lenkritzel 10 eine elektrische Spannung angelegt, wobei das Lenkritzel 10 als Anode fungiert. Für die Bearbeitung wird, wie nur beispielsweise in der Druckschrift DE 10 2006 046 765 A1 erläutert ist, ein vorhandener Spalt, vorzugsweise kleiner als 1 mm, zwischen Kathode und Lenkritzel 10 mit einer Elektrolytlösung gespült. Der Werkstoffabtrag an der Vorkontur 12V der Bohrung 12 erfolgt somit elektrochemisch und der aufgelöste Werkstoff wird als Metallhydroxid von der Elektrolytlösung aus der Bearbeitungszone herausgespült.

Insbesondere das PECM-Verfahren weist eine weitaus geringere Spaltbreite zwischen Kathode K und Lenkritzel 10 auf, vorzugsweise eine Spaltbreite von 0,01 bis 0,2 mm, und besitzt deshalb eine wesentlich höhere Bearbeitungsgenauigkeit (höhere Abbildungstreue der Kathodengeometrie) als das ECM-Verfahren, weshalb das PECM-Verfahren eine bevorzugte Ausführungsvariante darstellt. Charakteristisch für das PECM-Verfahren ist, dass der Bearbeitungsstrom nicht permanent anliegt wie beim ECM-Verfahren, sondern als gepulster Strom zugeführt wird. Das Verfahren der elektrochemischen Bearbeitung zeichnet sich weiterhin durch schnelle Prozesszeiten und hohe Prozessstabilität aus.

Zudem hat sich herausgestellt, dass beim Abtrag des Materials um das Aufmaß A im Schritt c) eine mechanische Oszillationsbewegung zwischen Kathode K und Lenkritzel 10 von Vorteil ist, da dabei die Elektrolytlösung in ausreichender Weise ausgetauscht wird.

Der Vorteil der elektrochemischen Bearbeitung (ECM oder PECM) besteht insbesondere darin, dass die Bearbeitung bei dem harten durch das Bainitisieren hervorgerufenen Gefügezustand zu einer besonders glatten Oberfläche der Seitenwand 12E-1 der Endkontur 12E führt und das Lenkritzel 10 insgesamt als hochfestes Lenkritzel 10 ausgebildet ist.

Das Bainitisieren im Schritt b) erzeugt somit mehrere Effekte. Das Lenkritzel 10 insgesamt ist nach dem Bainitisieren hochfest. Das heißt, nicht nur das Materialgefüge im Bereich der einzubringenden Bohrung 12 ist hochfest, sondern das Lenkritzel 10 insgesamt ist in vorteilhafter Weise gehärtet.

Die bainitisierte Oberfläche der Endkontur 12E der Bohrung 12 erfüllt nach der elektrochemischen Bearbeitung (ECM oder PECM) die gewünschten und reproduzierbaren Parameter hinsichtlich der Oberflächengüte.

Hinzu kommt der Effekt, dass das Lenkritzel 10 nach dem Härten durch die elektrochemische Bearbeitung (ECM oder PECM) nicht noch einmal thermisch oder mechanisch beansprucht wird, weshalb in dem Lenkritzel 10 auch keine Eigenspannungen erzeugt werden.

Der Verfahrensschritt zur Herstellung der Endkontur 12E der Bohrung 12 findet kontaktfrei zum Bearbeitungswerkzeug (Kathode) statt, wobei sich insbesondere zumindest eine Oberflächenqualität der Seitenwand 12E-1 der Endkontur 12E mit einer Oberflächengüte von R_{z} </= 5 µm (R_{z} = gemittelte Rautiefe oder Mittelwert aus den gemessenen Rautiefen) erreichen lässt. Es werden in vorteilhafter Weise bearbeitungsbedingte Riefen und Grate, die bei herkömmlicher Vorgehensweise entstehen können, vermieden.

Darüber hinaus lässt sich als Effekt nicht nur eine gegenüber den herkömmlichen Verfahren sehr hohe Oberflächengüte von R_{z} </= 5 µm der Endkontur 12E der Bohrung 12 erzielen, sondern als weiterer Effekt ist die erreichte Oberflächengüte von beispielsweise R_{z} </= 5 µm reproduzierbar und weist im Wesentlichen hinsichtlich ihrer strukturellen Oberflächenbeschaffenheit keine Schwankungsbreite auf, wobei insbesondere optisch mikroskopisch keine Strukturunterschiede in der Oberflächenbeschaffenheit erkennbar sind, worin ein wesentlicher Vorteil der erfindungsgemäßen Vorgehensweise besteht.

Die Oberflächengüte von R_{z} </= 5 µm wird insbesondere dann im unteren Bereich der erzeugbaren Oberflächengüte problemlos erreicht, wenn die elektrochemische Bearbeitung (ECM oder PECM) bei einem durch das Bainitisieren harten Gefügezustand des abzutragenden Materials durchgeführt wird.

Schließlich liegt ein Vorteil noch darin, dass das Bearbeitungswerkzeug (die Kathode) nahezu verschleißfrei ist. Außerdem werden geringe Prozesszeiten benötigt. Bei einer Tiefe der Bohrung von beispielsweise 18 mm und einer Vorschubgeschwindigkeit von beispielsweise 4 mm/s ergibt sich für den Verfahrensschritt c) eine Taktzeit von 4 bis 5 s.

Es versteht sich, dass das Bainitisieren prinzipiell unabhängig von der Einbringung der Bohrung 12 ist und durchgeführt werden kann, um die Härte des Lenkritzels 10 aller nicht genannten und vorne explizit genannten Bereiche 10.1, 10.2. 10.3 und 10.4, insbesondere des Verzahnungsbereichs 10.4, zu erhöhen.

In vorteilhafter Weise wird gemäß der Erfindung der Synergieeffekt erzeugt, dass bei der oben beschriebenen Vorgehensweise die Materialhärte des Lenkritzels 10 insgesamt und bezüglich der Bohrung 12 nicht nur die Oberflächengüte der Bohrung 12, sondern auch eine einheitliche für die elektrochemische Bearbeitung typische Oberflächenstruktur der Endkontur 12E der Bohrung 12, reproduzierbar ausbildbar ist/sind.

Erfindungsgemäß kann eine Zusammenbaueinheit hergestellt werden, bei der ein Drehstab in die fertige elektrochemisch bearbeitete Endkontur 12E der Bohrung 12 des bainitisierten Lenkritzels 10 durch Drehstabfügen des Drehstabes in die Bohrung 12 eingepresst wird.

Die Zusammenbaueinheit ist erfindungsgemäß Teil eines Lenksystems, welches sich dadurch auszeichnet, dass der Drehstab durch eine Fügeverbindung in die Endkontur 12E der Bohrung 12 eingepresst ist, wobei die Seitenwandung 12E-1 der Endkontur 12E der Bohrung 12 eine glatte und struktureinheitliche Oberfläche aufweist, die für die elektrochemische Bearbeitung typisch ist.

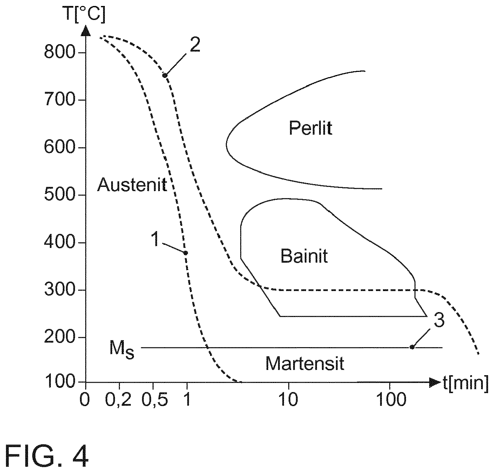

Die Figur 4 zeigt ergänzend ein Temperatur[T]-Zeit[t]-Diagramm zur Verdeutlichung des erfindungsgemäßen Verfahrens im Schritt b).

Die Kurve 1 verdeutlicht, dass in kurzer Zeit nach einem Erwärmen eines austenitischen Stahls auf Austenitisierungstemperatur ein Abkühlen auf eine Temperatur unterhalb der zwischen 250 °C und 500 °C liegenden Martensit-Stahlkurve 3 erfolgt.

Die Kurve 2 verdeutlicht, dass erfindungsgemäß im Schritt b1) ein Erwärmen eines bainitisierbaren Stahls auf Austenitisierungstemperatur vorgenommen wird, der anschließend im Schritt b2) in einem Salzbad auf eine Temperatur zwischen 250 °C und 500 °C oberhalb der Martensit-Stahlkurve 3 abgekühlt wird. Dabei ist vorgesehen, dass die Temperatur im Schritt b3) zwischen 250 °C und 500 °C oberhalb der Martensit-Stahlkurve 3 in dem Salzbad zwischen einigen Minuten bis Stunden auf der so genannten Bainit-Härtekurve 2 gehalten wird, wonach schließlich im Schritt b4) ein Abkühlen auf Raumtemperatur durchgeführt wird.

### Bezugszeichenliste

- 10: Lenkritzel
- 10.1: erster Lagerbereich
- 10.2: zweiter Lagerbereich
- 10.3: Überlastschutzbereich
- 10.4: Verzahnungsbereich
- 10.5: Korpus
- 12: Bohrung
- 12V: Vorkontur
- 12V-1: Seitenwand der Vorkontur
- 12E: Endkontur
- 12E-1: Seitenwand der Endkontur
- K: Kathode
- A: Aufmaß
- 1: austenitische Härtekurve
- 2: bainitische Härtekurve (Zwischenstufenvergüten)
- 3: Martensit-Stahl-Kurve

## Patentansprüche

1. Verfahren zur Herstellung eines Lenkritzels (10), **dadurch gekennzeichnet, dass** ein Rohling des Lenkritzels (10) aus einem bainitisierbaren Wälzlagerstahl nach EN ISO 683-17 hergestellt wird, der anschließend zur Erhöhung der Härte bainitisiert wird.

2. Verfahren nach Anspruch 1, **dadurch gekennzeichnet, dass** zur Herstellung einer Bohrung (12) in dem Rohling des Lenkritzels (10) vor dem Bainitisieren zunächst eine Bohrung (12) als Vorkontur (12V) in den Rohling eingebracht (Schritt a)) wird und das Lenkritzel (10) anschließend bainitisiert (Schritt b)) wird und schließlich eine Oberfläche der Bohrung (12) zur Veränderung der Oberflächengüte der Bohrung (12) zur Herstellung einer Endkontur (12E) nachbehandelt (Schritt c)) wird.

3. Verfahren nach Anspruch 2, **dadurch gekennzeichnet, dass** (Schritt a)) die Vorkontur (12V) der Bohrung (12) in das Lenkritzel (10) vor dem Bainitisieren (Schritt b)) mechanisch gebohrt oder mittels elektrochemischer Bearbeitung eingebracht wird.

4. Verfahren nach Anspruch 2, **dadurch gekennzeichnet, dass** die Endkontur (12E) der Bohrung (12) zur Veränderung der Oberflächengüte der Vorkontur (12V) der Bohrung (12) nach dem Bainitisieren (Schritt b)) des Lenkritzels (10) mittels elektrochemischer Bearbeitung nachbehandelt (Schritt c)) wird.

5. Verfahren nach Anspruch 3 oder 4, **dadurch gekennzeichnet, dass** die Vorkontur (12V) und/oder die Endkontur (12E) durch elektrochemische Bearbeitung (ECM) oder durch die gepulste elektrochemische Bearbeitung (PECM) eingebracht/nachbehandelt (Schritte a) und c)) wird.

6. Verfahren nach Anspruch 5, **dadurch gekennzeichnet, dass** das Lenkritzel (10) aus Wälzlagerstahl nach EN ISO 683-17 mit der Bezeichnung 100Cr6 besteht, der eine chemische Stoffzusammensetzung in Gewichts-% mit 0,93 bis 1,05 Kohlenstoff (C:), 0,15 bis 0,35 Silizium (Si:) und 0,25 bis 0,45 Mangan (Mn:) und 1,35 bis 1,6 Chrom (Cr:) und gegebenenfalls weiteren geringfügigen chemischen Stoffen aufweist.

7. Verfahren nach Anspruch 1 oder 2, **dadurch gekennzeichnet, dass** das Bainitisieren (Schritt b)) des Lenkritzels (10) vorgenommen wird, indem der Rohling des Lenkritzels (10) oder das mit der Vorkontur (12V) als Bohrung (12) versehene Lenkritzel (10) folgenden Teilschritten unterzogen wird,
• Erwärmen (Schritt b1)) auf Austenitisierungstemperatur;
• Abkühlen (Schritt b2)) in einem Salzbad auf eine Temperatur zwischen 250 °C und 500 °C oberhalb einer Martensit-Stahlkurve (3),
• Halten (Schritt b3)) der Temperatur zwischen 250 °C und 500 °C oberhalb der Martensit-Stahlkurve (3) in dem Salzbad zwischen einigen Minuten bis Stunden auf einer Bainit-Härtekurve (2),
• Abkühlen (Schritt b4)) auf Raumtemperatur.

8. Lenkritzel (10), **dadurch gekennzeichnet, dass** das Lenkritzel (10) aus einem bainitisierbaren Wälzlagerstahl nach EN ISO 683-17 besteht und bainitisiert ist.

9. Lenkritzel (10) nach Anspruch 8, **dadurch gekennzeichnet, dass** das Lenkritzel (10) eine Bohrung (12) aufweist, die nach mindestens einem der Verfahrensschritte nach den Ansprüchen 2 bis 7 hergestellt ist, wobei eine Endkontur (12E) der Bohrung (12) durch elektrochemische Bearbeitung des zuvor bainitisierten Wälzlagerstahls nach EN ISO 683-17 nachbehandelt ist, so dass die Seitenwandung (12E-1) der Endkontur (12E) der Bohrung (12) eine glatte und struktureinheitliche Oberfläche aufweist, die für die elektrochemische Bearbeitung typisch ist.

10. Lenkritzel (10) nach Anspruch 9, **dadurch gekennzeichnet, dass** zumindest die Seitenwandung (12E-1) der Endkontur (12E) der Bohrung (12) durch die elektrochemische Bearbeitung die glatte Oberfläche mit einer gemittelten Rautiefe (R_{z}) aufweist, die kleiner/gleich </= 5 µm beträgt.

11. Lenkritzel (10) nach Anspruch 9 oder 10, **dadurch gekennzeichnet, dass** eine Vorkontur (12V) und/oder die Endkontur (12E) durch elektrochemische Bearbeitung (ECM) oder durch die gepulste elektrochemische Bearbeitung (PECM) ausgebildet ist/werden.
